(19) Europäisches Patentamt
European Patent Office
Office européen des brevets

(11) Veröffentlichungsnummer: **0 006 580**
**B1**

(12) **EUROPÄISCHE PATENTSCHRIFT**

(45) Veröffentlichungstag der Patentschrift: **13.01.82**

(51) Int. Cl.³: **G 01 N 3/32**

(21) Anmeldenummer: **79102053.0**

(22) Anmeldetag: **21.06.79**

# (54) Messverfahren für die Registrierung von Aenderungen an einer Materialprobe.

(30) Priorität: **26.06.78 CH 6911/78**

(43) Veröffentlichungstag der Anmeldung:
**09.01.80 Patentblatt 80/1**

(45) Bekanntmachung des Hinweises auf die Patenterteilung:
**13.01.82 Patentblatt 82/2**

(84) Benannte Vertragsstaaten:
**AT BE CH DE FR GB IT NL SE**

(56) Entgegenhaltungen:
**CH - A - 411 414**
**DE - A - 1 904 864**
**FR - A - 1 297 607**
**LU - A - 62053**
**US - A - 3 675 471**
**US - A - 3 919 883**

**VDI-Berichte, Bd. 4, 1955, Seiten 15—19 "Die mechanische Hemmung un der mechanische Widerstand als Meßgrößen in der Schwingungstechnik", von F. Spandöck und H. Wilke**

(73) Patentinhaber: **Schweizerische Aluminium AG**
**CH-8212 Neuhausen am Rheinfall (CH)**

(72) Erfinder: **Leupp, Jürg**
**Kirchweg 36**
**CH-8245 Feuerthalen (CH)**

(74) Vertreter: **Troesch, Hans Alfred, Dr. Ing. et al,**
**Walchestrasse 19**
**CH-8035 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP 0 006 580 B1**

# Messverfahren für die Registrierung von Aenderungen an einer Materialprobe.

Die vorliegende Erfindung betrifft ein Messverfahren für die Registrierung von Aenderungen an einer Materialprobe bei Wechselbeanspruchung, aus Aenderungen des Frequenzganges einer mechanischen Impedanz, definiert als Vektorquotient von Geschwindigkeit und Kraft in der komplexen Ebene sowie einen Hochfrequenzpulsator zur Ausführung des Verfahrens.

In der modernen Bruchmechanik ist der Wert da/dN (Rissfortschritt pro Lastwechsel) als Kennwert für die Beurteilung des Ermüdungsverhaltens eines Materials oder eines Bauteils nicht mehr wegzudenken.

Es sind Verfahren bekannt, z.B. aus der DE—OS 1 904 864, dem Artikel "Verfolgung des Schädigungsablaufes wechselnd beanspruchter Stahlproben durch instrumentierte Schwingprüfung", Materialprüfung 19 (1977) No. 11, November, mit deren Hilfe aus Aenderungen des Frequenzganges einer mechanischen Impedanz Aenderungen an der Materialprobe qualitativ ermittelt werden. Dass diese Verfahren nur qualitative Resultate für einen Probenanriss und dann für den Rissfortschritt ergeben, ist auf die Tatsache zurückzuführen, dass auch Gefügeänderungen des Probenmaterials Impedanzänderungen bewirken, welche von denen bei der Rissentstehung nicht zu unterscheiden sind. Mit anderen Worten ermöglichen die genannten Verfahren eine quantitative Aussage über den Rissfortschritt deshalb nicht, weil nicht aus den Aenderungen des Frequenzganges der mechanischen Impedanz eindeutig darauf geschlossen werden kann, bis wann derartige Aenderungen lediglich auf Gefügeänderungen an der Probe zurückzuführen sind oder ab wann solche Aenderungen der Rissentstehung und schliesslich dem Rissfortschritt zuzuordnen sind. Deshalb werden Proben, welche mit Pulsatoren einer mehr oder weniger sinusförmigen Wechselbelastung ausgesetzt werden, für quantitative Resultate über Rissentstehung und Rissfortschritt, mit Lichtmikroskopen, auf die Probe aufgebrachten Moiré-Mustern, Risslängen-Messfolien mit Dehnungsmess-Streifen, Messbügeln zur Rissaufweitungsmessung oder mit Wirbelstromerzeugern beobachtet resp. deren Riss detektiert. Das Vorsehen von optischen Beobachtungsvorrichtungen, wie das erwähnte Lichtmikroskop, bedingt eine praktisch ununterbrochene Präsenz des Operateurs während des Prüfbetriebs, so dass dieser während Nacht- und Wochenenden eingestellt werden muss. Damit ergibt sich eine schlechte Maschinenausnützung und ein geringer Probendurchlauf. Dass je nach den Versuchsbedingungen, bei Erreichen bestimmter vorgegebener Risslängen oder bei Erreichen vorgegebener Lastwechselzahlen, Entscheide getroffen und Eingriffe in den Versuchsablauf vorgenommen werden müssen, ist ein weiterer Grund für die erforderliche hohe Präsenz des Operateurs. Da weiter das Rissverhalten an der Probenoberfläche mitnichten dem Rissverhalten innerhalb der Probe zu entsprechen braucht, ist für die Beobachtung der Probenoberfläche erfahrenes Personal einzusetzen.

Im weiteren ist aus der LU—A— 62 053 ein Verfahren bekannt geworden, bei welchem die akustische Impedanz einer Materialprobe als Messgrösse verwendet wird, um den Schädigungsverlauf daran festzustellen. Die oben im Lichte der DE—OS—1 904 864 bezüglich der mechanischen Impedanz gemachten Aussagen gelten vollumfänglich auch für dieses letzterwähnte Verfahren. Auch hier ergeben Gefügeänderungen im Probenmaterial vor der Rissbildung Aenderungen der akustischen Impedanz, die nicht von denjenigen zu unterscheiden sind, welche dann entstehen, wenn sich ein Riss gebildet hat und fortschreitet. Im Hinblick auf diese Unsicherheit ist ersichtlich, dass auch dieses Verfahren eine eindeutige quantitative Aussage über den Rissfortschritt an einer Materialprobe nicht ermöglicht.

Anderseits ist aber das Anbringen von Messwandlern auf die Probe eine äusserst zeitaufwendige Präzisionsarbeit, was sich insbesondere bei Reihenversuchen sehr nachteilig auswirkt. Zudem erfassen diese Wandler, wie die obenerwähnten Folien etc., nur Veränderungen an der Probenoberfläche.

Die vorliegende Erfindung bezweckt folgende Aufgaben zu lösen:

Es soll ein vollautomatisierbares Messerverfahren vorgeschlagen werden, welches ohne weiteres ermöglicht, den Rissfortschritt kontinuierlich zu erfassen und in elektrische Signale zu wandeln, welche, je nach den Versuchsbedingungen, eine Rechnersteuerung des Pulsators sowie eine vollautomatische Registrierung des Rissfortschrittes auf herkömmlichen Registrierungsvorrichtungen, wie Schreiber, Lochstanzer, Band- oder Plattenspeicher etc. ermöglichen. Es soll dabei die effektive Flächenänderung senkrecht zur Probenbeanspruchungsrichtung erfasst werden, so dass auch eventuell auftretende Sekundärrisse, auch innerhalb der Probe, registriert werden.

Zu diesem Zweck zeichnet sich das erfindungsgemäss vorgeschlagene Verfahren dadurch aus, dass diese Aenderungen an einer, zur Festlegung definierter Anfangsbedingungen vorgerissenen, vorzugsweise an einer bruchmechanischen Probe als quantitatives Mass für den Rissfortschritt registriert werden.

Berücksichtigt man jedoch, dass die Aenderung des Amplitudenganges eines zur Resonanz fähigen Gebildes nicht nur von einer Resonanzfrequenzverschiebung, sondern auch von der jeweiligen Dämpfung abhängig ist, so zeigt es sich, dass für hochpräzise Messungen eine Ausführung des Verfahrens nach dem Wortlaut des Anspruchs 3 angezeigt ist.

Eine besonders gute Auflösung für die Messung des Rissfortschrittes ergibt sich bei einer Ausführung des Verfahrens nach dem Wortlaut des Anspruchs 4.

Ist es wünschenswert, bei relativ hohen Beanspruchungsfrequenzen zu arbeiten, so wird die grösstmögliche Auflösung durch die Ausführung des Verfahrens nach dem Wortlaut des Anspruchs 5 erreicht.

Sind jedoch bei den zur Verfügung stehenden Beanspruchungsapparaten (Pulsatoren) nicht relativ hohe Frequenzen erreichbar, oder eignen sich derart hohe Messfrequenzen schlecht für eine entsprechende Steuerung des Messablaufes, so wird vorgeschlagen, das Messverfahren nach dem Wortlauf des Anspruchs 6 durchzuführen.

Dabei ergibt sich hier wiederum eine besonders gute Auflösung, wenn das Verfahren zusätzlich nach dem Wortlaut des Anspruchs 7 ausgeführt wird.

Eine Inbezugsetzung der registrierten Frequenzgangänderungen mit den momentan vorherrschenden Beanspruchungszuständen erübrigt sich, falls das Verfahren nach dem Wortlaut des Anspruchs 8 oder 9 ausgeführt wird.

Eine Ausführung des Messverfahrens nach dem Wortlaut des Anspruchs 10 drängt sich dann auf, wenn aus Sicherheitsgründen in gewissen Frequenzbereichen des Frequenzganges nicht gemessen werden darf, oder aber aus Gründen der Wirkungsgradoptimierung gerade an bestimmten Stellen des Frequenzgangverlaufes gemessen werden soll, unabhängig vom Rissfortschritt. Bei einer Wirkungsgradoptimierung bietet sich ein Vorgehen nach dem Wortlaut des Anspruchs 11 an.

Da Pulsatoren auf dem Markt existieren, welche aus Gründen der Wirkungsgradoptimierung kontinuierlich in Resonanz betrieben werden, ist es angezeigt, je nach Vorliegen der pulsatorinternen Regelung das vorgeschlagene Messverfahren nach dem Wortlaut des Anspruchs 12 oder des Anspruchs 13 durchzuführen.

Die gewerbliche Anwendbarkeit des Verfahrens ergibt sich aus den namhaften Vereinfachungen, die es gegenüber herkömmlichen mit sich bringt, was die Materialprüfung, beispielsweise für Konstruktionsteile, an welche hohe Anforderungen gestellt werden müssen, verbilligt.

Die Erfindung wird anschliessend beispielsweise anhand von Figuren erläutert.

Es zeigen:

Fig. 1 den qualitativen Frequenzgang (Bode-Diagramm) einer Probe,

Fig. 1a den Amplitudengang des Quotienten zwischen Probenbewegung $\overline{v}$ und Belastungskraft $\overline{F}$, im weiteren generell als mechanische Impedanz $\overline{Z}$ bezeichnet, und

Fig. 1b den Phasengang obgenannter mechanischer Impedanz,

Fig. 2 ein Blockdiagramm eines Messprozesses zur Auswertung von rissfortschrittbedingten Aenderungen im Amplitudengang einer mechanischen Impedanz, bei konstant geregeltem Kraftantrieb oder Geschwindigkeitsantrieb,

Fig. 3 ein Blockdiagramm eines Messprozesses zur Auswertung von rissfortschrittbedingten Aenderungen des Phasenganges einer mechanischen Impedanz,

Fig. 4 ein Blockschaltbild eines Messprozesses zur automatischen Nachführung einer Messfrequenz, entsprechend einer konstant geregelten Phasenlage, einer sich mit dem Rissfortschritt ändernden mechanischen Impedanz,

Fig. 5 die grundsätzliche Anordnung eines Hochfrequenzpulsators mit direktor elektromagnetischer Belastungsübertragung,

Fig. 6 ein mechanisches Ersatzbild für die Kopplung von Probe und Pulsatormasse,

Fig. 7 eine qualitative Darstellung des Frequenzganges des Ersatzbildes gemäss Fig. 6 (Bode-Diagramm), wobei

Fig. 7a den Amplitudengang und

Fig. 7b den Phasengang aufzeigen,

Fig. 8 eine grundsätzliche Darstellung eines mechanischen Pulsators mit vorgesehenen Kraft- und Bewegungsmessvorrichtungen.

Zur Klarstellung muss vorerst festgehalten werden, dass bruchmechanische Proben per definitionem eine wohldefinierte Kerbe als Riss aufweisen.

Der Frequenzgang einer Probe P kann beispielsweise anhand ihrer mechanischen Impedanz (Teilimpedanz mit Index P von Fig. 6) erläutert werden, welche als Quotient der Geschwindigkeit $\overline{v}$ an ihrem einen Ende und der auf sie wirkenden Kraft $\overline{F}$ definiert werden kann. Dabei sind $\overline{v}$ und $\overline{F}$ komplexe Grössen. Die Probenimpedanz $\overline{Z}(p) = \overline{Z}(j\omega)$ ergibt sich zu

$$\overline{Z}_p(p) = \frac{p\,(1/K_P)}{1 + p\,\frac{2\xi_P}{\omega_{oP}} + p^2 \cdot \frac{1}{\omega_{oP}^2}} \qquad (1)$$

Dabei bedeuten: (2)

$K_P$ : Federkonstante der Probe

$\xi_p$ : Dämpfungskonstante der Probe $= H_P(m_P\ K_P)^{-\frac{1}{2}}$

$H_P$ : linear von der Geschwindigkeit abhängige Reibung

$m_P$ : Masse der Probe

$\omega_{oP}$ : Grund-Resonanzfrequenz der Probe $= \sqrt{\frac{K_P}{m_P}}$ (3)

In Fig. 1 ist qualitativ als Bode-Diagramm der Frequenzgang der Probenimpedanz $\overline{Z}_P(p)$ dargestellt. Bei einer Pulsationsfrequenz $\omega = \omega_{oP}$ entsteht im Amplitudengang (Fig. 1a) eine Resonanzüberhöhung, welche desto höher ist, je kleiner $\xi_P$ ist. Beidseits der Resonanzfrequenz $\omega_{oP}$ fällt der Amplitudengang schliesslich asymptotisch mit −20dB pro Frequenzdekade ab.

Die Federkonstante $K_P$ der Probe ergibt sich zu

$$K_P = \frac{A_P}{1_P} \cdot E_P: \qquad (4)$$

Dabei bedeuten:
$A_P$: Querschnittsfläche der Probe senkrecht zur auf sie wirkenden Pulsationskraft
$1_P$: Länge der Probe in Richtung der Pulsationskraft
$E_P$: den Elastizitätsmodul des Probenmaterials

Bei Auftreten eines Risses in der Probe wird die in der Federkonstanten $K_P$ auftretende Querschnittsfläche $A_P$ verringert. Es ist leicht zu überprüfen, dass die relative Aenderung der Resonanzfrequenz

$$\frac{d\omega_{oP}}{\omega_{oP}} \text{ der relativen Aenderung } \frac{dA_P}{A_P}$$

entspricht, d.h. die Resonanzfrequenz der Probe verschiebt sich relativ gleichermassen gegen tiefere Frequenzen hin, wie sich die Querschnittsfläche $A_P$ durch Fortschreiten eines Querrisses relativ verkleinert. Wie aus Formel (2) ersichtlich ist, nimmt bei einer Abnahme der Resonanzfrequenz, bedingt durch eine Abnahme der in der Federkonstanten $K_P$ wirksamen Querschnittsfläche der Probe $A_P$, $\xi_P$ zu, woraus zu ersehen ist, dass bei fortschreitender Rissbildung und dadurch bedingter Abnahme der Resonanzfrequenz $\omega_{oP}$ auch die Resonanzüberhöhung abnimmt. Dies ist in Fig. 1a gestrichelt und mit den Pfeilen S dargestellt.

In Fig. 1b ist der Phasengang der Impedanz $\overline{Z}_P(p)$ dargestellt. Daraus ist ersichtlich, dass die Phase $\varphi$ für kleine Frequenzen gegen $+\frac{\pi}{2}$ strebt, bei Resonanzfrequenz $\omega_{oP}$ Null ist und für grosse Frequenzen gegen $-\frac{\pi}{2}$ strebt. Wie in Fig. 1a für den Amplitudengang ist in Fig. 1b wiederum qualitativ die Veränderung des Phasenganges bei zunehmender Rissbildung gestrichelt dargestellt. Diese Veränderungen des Frequenzganges der mechanischen Impedanz $\overline{Z}_P(p)$ der zu prüfenden Probe, können nun dazu ausgenützt werden, den Rissfortschritt zu messen. In den Fig. 2—4 sind entsprechende Blockdiagramme der Messprozesse dargestellt. Im Messprozess gemäss dem Diagramm von Fig. 2 wird der Probe über einen Antrieb M eine Pulsationskraft $\overline{F}$, oder eine Pulsationsgeschwindigkeit $\overline{v}$, zugeführt.

Dabei wird der Antrieb vorzugsweise auf

$$/\overline{F}/ = \text{const} = F_o \qquad (a)$$

oder auf

$$/\overline{v}/ = \text{const} = v_o \qquad (b)$$

geregelt. Generell werden diese beiden Möglichkeiten auch in Fig. 3, 4 durch Angabe beider Symbole $\overline{F}$ und $\overline{v}$ je auf den entsprechenden Seiten der Signalpfade angedeutet.

Bei (a) gilt $G(p) = \overline{Z}_P(p)$

Hierbei bezeichnet G(p) die Uebertragungsfunktion zwischen eingangsseitig auf die Probe aufgebrachtem Signal und ausgangsseitig resp. resultierendem Signal, d.h. die Uebertragungsfunktion zwischen aufgebrachter Kraft und resultierender Geschwindigkeit oder Schnelle resp. umgekehrt. Daraus ist ersichtlich, dass bei konstantgehaltener Pulsationskraft die Probe mit sich ausbildendem Riss $A_P(t)$ eine Aenderung der Pulsationsgeschwindigkeit entsprechend der Gesetzmässigkeit

$$/\overline{v}/ = F_o \cdot /\overline{Z}_P(p)/$$

bewirkt.

Bei (b) gilt:

$$G(p) = \overline{Z}_P(p)^{-1} \text{ und entsprechend}$$

$$/\overline{F}/ = /\overline{Z}_P(p)^{-1}/ \cdot v_o$$

Die Probenimpendanz $\overline{Z}_P(p)$ wird durch die lastwechselzahlund damit zeitabhängige Rissbildung und die sich damit zeitlich verändernde Probenquerschnittsfläche $A_P(t)$ resp. $A_P(N)$ beeninflusst. Die detektierte veränderliche Grösse $\overline{v}$ resp. $\overline{F}$ wird einer Betragsbildung unterzogen, womit die Amplitudenbeträge $/\overline{v}/$ resp. $/\overline{F}/$ als Messkriterium gebildet werden. Bei diesem Messprozess wird die Frequenz auf einer Messfrequenz $\omega_m$ konstant gehalten. Wie aus den Fig. 1a und 1b ersichtlich ist, wird diese Messfrequenz $\omega_m$ vorzugsweise grösser gewählt als die Probenresonanzfrequenz $\omega_{oPo}$ beim Anfangs-Bedingungsriss, damit sich bei abnehmender Resonanzfrequenz $\omega_{oP}$ der Probe eine möglichst grosse Aenderung $\Delta/Z/$ des Impedanzbetrages $/\overline{Z}_P(p)/$ ergibt.

Im Prozess gemäss dem Blockdiagramm von Fig. 3 wird ein Antrieb M verwendet. Der Antrieb braucht hier nicht geregelt zu sein. An der Probe wird die auf sie wirkende Pulsationskraft $\overline{F}$ und ihre Pulsationsbewegung resp.

-Geschwindigkeit $\overline{v}$ erfasst.

Es gilt:

$$\overline{F} = \overline{Z}_P(p)^{-1} \cdot \overline{v};\ \sphericalangle\, \overline{Z}_P(p)^{-1} = \sphericalangle \overline{F} - \sphericalangle \overline{v}$$

oder

$$\overline{v} = \overline{Z}_P(p)\overline{F};\ \sphericalangle\, \overline{Z}_P(p) = \sphericalangle \overline{v} - \sphericalangle \overline{F}$$

Anstelle der Auswertung einer Veränderung im Amplitundengang des Impedanz-Frequenzganges, wird hier die Veränderung im Phasengang für die Messung des Rissfortschrittes entsprechend der sich zeitlich verändernden Fläche $A_p$ (t) detektiert. Dazu wird die der Probe zugeführte Kraft $\overline{F}$ und die resultierende Geschwindigkeit $\overline{v}$ gemeinsam einer Phasenmesseinheit $\Delta\,\varphi$ zugeführt. Die Phasendifferenz zwischen der auf die Probe wirkenden Kraft $\overline{F}$ und der Geschwindigkeit $\overline{v}$ entspricht der Impedanzphase gemäss Fig. 1b, welche sich mit zunehmender Rissbildung in Richtung des Pfeiles S verändert.

Die Detektion der Geschwindigkeit am nicht ortsfest am Pulsator eingespannten Probenende kann auf herkömmliche Art und Weise, z.B. opto-elektrisch oder mit einem Piezoelement, durch Detektion des zurückgelegten Weges und anschliessende Ableitung nach der Zeit realisiert werden. Ebenso sind Messeinrichtungen für die Messung einer pulsierenden Kraft gemäss $\overline{F}$, beispielsweise Kraftmessdosen, bekannt. Die zu detektierenden Signale v und $\overline{F}$ werden vorzugsweise durch die Detektoren direkt oder letzteren nachfolgend in elektrische Signale gewandelt. Stehen das Geschwindigkeits- wie auch das Kraftsignal in elektrischen Anzeigesignalen zur Verfügung, so ist die anschliessende Betragsbildung gemäss dem Prozess von den Fig. 2 und 3 problemlos zu realisieren, ebenso die anschliessende Signalverknüpfung zur Phasendetektion.

In Fig. 4 ist das Blockschema eines Prozesses zur Frequenznachführung dargestellt, durch welches die Veränderung der Proben-Resonanfrequenz $\omega_{oP}$ ($\Delta\omega_{oP}$ von Fig. 1a) gemessen wird. Grundsätzlich kann dieses Messverfahren so realisiert werden, dass mit einer Frequenznachführung die Extremalstelle des Amplitudenganges gesucht wird. Dieses Verfahren ist jedoch relativ aufwendig, da dieser Extremalwert mit der Resonanzüberhöhung abhängig von der momentanen Resonanzfrequenz ist. Wesentlich besser eignet sich für eine Frequenznachführung die Auswertung des Phasenganges. Die Eindeutigkeit des Phasen-Nulldurchganges bei jeder Resonanzfrequenz $\omega_{oP}$ lässt sich zu diesem Zweck gut ausnützen. Deshalb baut der Prozess gemäss Fig. 4 auf demjenigen von Fig. 3 auf, mit dem Unterschied, dass die detektierte Phasendifferenz $\Delta\varphi$ mit einem vorgegebenen Wert $\Delta\varphi_o$ als Führungsgrösse verglichen wird, die daraus resultierende Regeldifferenz $S(\Delta\varphi_o - \Delta\varphi)$ in ein Frequenzsteuersignal $S(\Delta\omega)$ gewandelt wird, welch letzteres zur Frequenzsteuerung auf den Antrieb M rückgeführt wird.

Bei $\Delta\varphi_o = o$ entsteht eine Resonanzfrequenznachführung. Dieser Messprozess entspricht einer Phasenverriegelung. Als Messignal wird die nachgeregelte Frequenz $\omega_{oP}$ ausgewertet.

Das direkte Messen des Probenfrequenzganges, wie es anhand der Fig. 1—4 erläutert worden ist, stellt sehr hohe bauliche Anforderungen an den Pulsator. Dies ist sofort ersichtlich, wenn man bedenkt, dass sich beispielsweise für eine bruchmechanische Aluminiumprobe mit einem Elastizitätsmodul von

$$E_P = 7{,}2 \cdot 10^9 \cdot 9{,}81 \cdot \frac{N}{m^2}$$

einer Anfangs-Querschnittsfläche $A_P(o) = 0{,}001\ m^2$ und

einer Probenlänge von $1_P = 0{,}1\ m$

eine Resonanzfrequenz von ca. 16 kHz ergibt.

Soll dabei der Frequenzgang der Probe durch den Pulsator selbst nicht gestört werden, so müssen alle am Pulsator auftretenden Resonanzfrequenzen wesentlich höher sein, als die Proben-Resonanzfrequenz $\omega_{oP}$. Dies bedingt, dass am Pulsator äusserst geringe Massen mitpulsieren dürfen, was praktisch wiederum bedingt, dass die Kraftübertragung vom Pulsator auf die Probe nicht mechanisch, sondern beispielsweise elektromagnetisch, mit der Ausnützung elektrischer Kraftfelder geschieht. Da zudem, wie erläutert worden ist, die Messfrequenz bei Ausnützung des Amplitudenganges vorteilhafterweise oberhalb der Proben-Resonanzfrequenz $\omega_{oP}$ gewählt wird, ergibt sich beim Prozess gemäss Fig. 2 in derart kurzer Zeit eine derart grosse Anzahl von Lastwechseln, dass ein grosser Aufwand betrieben werdem muss, um ein zur Auswertung der Messignale geeignetes, sehr schnelles Messystem zu schaffen, das auch Belastungsänderungen zulässt, bei Erreichen bestimmter Risslängen oder vorgegebener Lastwechselzahlen. Bei Ausnützung von Veränderungen im Phasengang der Probenimpedanz können gleichermassen Messfrequenzen verwendet werden, die tiefer liegen als die Proben-Resonanzfrequenz. Für eine gute Detektion der Phasenveränderung sollte jedoch die Messfrequenz in etwa innerhalb der Resonanzbandbreite liegen. Diese ist durch die beiden Grenzfrequenzen gegeben, an welchen der Amplitudengang bezüglich seines Amplitudenextrems auf den $\frac{1}{\sqrt{2}}$-Wert abgefallen ist. Auch hier muss mit sehr hohen Lastwechselzahlen pro Zeiteinheit gearbeitet werden. Zur Ausführung der bis anhin beschriebenen Verfahren können herkömmliche mechanische Pulsatoren kaum verwendet werden.

In Fig. 5 ist der grundsätzliche Aufbau eines elektromagnetischen Pulsators dargestellt, mit dessen Hilfe wegen der kleinen zusätzlichen Trägheit der eigentlichen Messvorrichtung Messfrequenzen zu erreichen sind, welche grösser als die Resonanzfrequenz der Proben sind. Die Probe P wird einseitig in einer Halterung 1 eingespannt. Eine Kraftmessvorrichtung, beispielsweise eine Kraftmessdose 3, registriert die durch die Probe P auf die Einspannvorrichtung 1 übertragene Kraft und gibt in Funktion dieser Kraft $\overline{F}$ ein Signal $S(\overline{F})$ ab. Dabei wirkt die Kraftmessdose 3 vorzugsweise als mechanisch/elektrischer Wandler und gibt somit ein elektrisches Signal ab. Die Probe P ist auf ihrer nicht eingespannten Seite mit einer Kappe 5 aus gut magnetisch leitendem Material versehen, welche jedoch, verglichen mit der Probe P, eine praktisch vernachlässigbare Masse aufweist. Der Kappe 5 unmittelbar gegenüberliegend, ist, stationär, ein magnetischer Gegenpol 7 aus magnetisch gut leitendem Material angeordnet, wobei zwischen dem Pol 7 und der Kappe 5 ein elektrischer Generator angeschlossen ist, welcher wahlweise zur Konstanthaltung seiner Ausgangsspannungsamplitude $\overline{U}_o$ oder seiner Ausgangs-Stromamplitude $\overline{I}_o$ geregelt ist (nicht dargestellt) und somit bei Bedarf als idealer Geschwindigkeits- resp. Kraftantrieb wirkt. Die Antriebskraft wird der Kappe 5 und damit der Probe über das im Luftspalt zwischen Pol 7 und Kappe 5 angelegte Wechselfeld $\dot{E}\sim$zugeführt. Die Geschwindigkeit des nicht eingespannten Probenendes kann beispielsweise mit einem Piezoelement 9 registriert werden, welches ein elektrisches Signal $S(\overline{s})$ in Abhängigkeit seiner Dehnungabgibt. Die Ableitung nach der Zeit dieses Signals ergibt eine elektrisches Signal als Mass für die Geschwindigkeit $\overline{v}$ der Probe P. Die Konstanthaltung der Generatorspannung $\overline{U}_Q$ wirkt in Analogie zur Konstanthaltung der Probengeschwindigkeit $\overline{v}$, während die Konstanthaltung des Generatorstromes $\overline{I}_o$ der Realisation eines Konstantkraftantriebes entspricht, gemäss Fig. 2.

Bei der Verwendung herkömmlicher mechanischer Pulsatoren mit einer relativ grossen Antriebsmasse ergibt sich das in Fig. 6 dargestellte mechanische Ersatzbild.

Darin bedeuten:

$K_M$ die Federkonstante der mitpulsierenden Pulsatormasse
$m_M$ die mitpulsierende Pulsatormasse
$H_M$ die geschwindigkeitsabhängige Reibung, welche bei der Pulsation auf die Pulsatormasse wirkt
$K_P$ die Federkonstante der Probe
$m_P$ die Mass der Probe
$H_P$ die geschwindigkeitsabhängige Reibung an der Probe

Vom Antrieb her betrachtet, ergibt sich aus diesem Ersatzbild welches nur eine erste Näherung bilden kann, eine mechanische Impedanz $\overline{Z}_{tot}(p)$ zu

$$\overline{Z}_{tot}(p) = \frac{p\left(1 + \frac{2\xi_{MP}}{\omega_{oMP}} p + \left(\frac{p}{\omega_{oMP}}\right)^2\right)}{\left(1+p\frac{2\xi_P}{\omega_{oP}} + \left(\frac{p}{\omega_{oP}}\right)^2\right)\left(1+p\frac{2\xi_M}{\omega_{oM}} + \left(\frac{p}{\omega_{oM}}\right)^2\right)} \quad (5)$$

Darin bedeuten:

$\omega_{oMP}$ die Serieresonanzfrequenz des Ersatzbildes gemäss Fig. 9, wobei gilt:

$$\omega_{oMP} = \left(\frac{K_M + K_P}{m_M + m_P}\right)^{\frac{1}{2}} \quad (6)$$

$\xi_{MP}$: Die Dämpfungskonstante des Gesamtkreises, wobei gilt:

$$2\xi_{MP} = (H_M + H_P)\,(m_M + m_P)^{-\frac{1}{2}} \cdot (K_M + K_P)^{-\frac{1}{2}} \quad (7)$$

Es bedeuten weiter:

$\omega_{oP}$: eine Parallel-Resonanzfrequenz des Ersatzbildes gemäss Fig. 9 bei Probenresonanz, wobei (3) gilt. Es gilt auch weiterhin (2).

$\omega_{oM}$: eine Parallel-Resonanzfrequenz des Ersatzbildes von Fig. 6 bei Resonanz der Pulsatormasse, wobei gilt:

$$\omega_{oM} = \left(\frac{K_M}{m_M}\right)^{\frac{1}{2}} \quad (8)$$

und für die entsprechende Dämpfungskonstante:

$$\xi_M = H_M \left(m_M \cdot K_M\right)^{-\frac{1}{2}} \quad (9)$$

Aus diesen Ausdrücken ist ersichtlich, dass die Resonanzfrequenz $\omega_{oM}$ nicht von der Probenfederkonstanten $K_P$ und somit nicht vom Rissfortschritt abhängig ist. Vom Rissfortschritt abhängig bleiben lediglich die Parallelresonanz $\omega_{oP}$ er Probe und die Serieresonanz des Gesamtgebildes bei $\omega_{oMP}$. Mit herkömmlichen Grössen für Elastizitätsmodul und Mass von Pulsatoren gilt:

$$\omega_{oM} < \omega_{oMP} \ll \omega_{oP} \quad (10)$$

Damit lässt sich qualitiativ das Bode-Diagramm des Frequenzganges der mechanischen Impedanz $\overline{Z}_{tot}(p)$ gemäss Fig. 7a, b herleiten. Mit den folgenden Pulsator- und Probendimensionen für eine Stahlpulsatormasse sowie eine Aluminiumprobe

Höhe der Probe: 0,1 m

Breite der Probe: 0,05 m

Dicke der Probe: 0,02 m

Elastizitätsmodul für Aluminium $E_{Al}$: $7{,}2 \cdot 10^9 \cdot 9{,}81 \frac{N}{m^2}$

Spezifische Masse von Aluminium $\rho_{Al}$: $2{,}7 \cdot 9.81 \cdot 10^3 \frac{kg}{m^3}$

Querschnittsfläche der Pulsatormasse: $0{,}1^2 \cdot \pi m^2$

Länge der Pulsatormasse: 3 m

Elastizitätsmodul von Stahl: $21 \cdot 10^9 \cdot 9{,}81 \frac{N}{m^2}$

Spezifische Masse von Stahl: $\rho_{Fe} = 7{,}9 \cdot 9{,}81 \cdot 10^3 \frac{kg}{m^3}$

ergeben sich folgende Resonanzfrequenzen:

$$\omega_{oM} \cong 540 \text{ Hz}$$

$$\omega_{oMP} \cong 630 \text{ Hz}$$

Im weiteren ergeben sich bei optimaler Schmierung der Pulsatormasse relativ kleine Werte für $\xi_{MP}$ und ohnehin für $\xi_P$, so dass bei $\omega_{oM}$ und $\omega_{oMP}$ starke Resonanzüberhöhungen auftreten. Hält man sich diesen Sachverhalt vor Augen sowie die Tatsache, dass $\omega_{oM}$ und $\omega_{oMP}$ relativ nahe beieinander liegen, so ist ersichtlich, dass der Amplitudengang der Impedanz $\underline{Z}_{tot}(p)$ zwischen den genannten Frequenzen einen relativ steilen Verlauf hat, der weit steiler als —20dB pro Frequenzdekade sein kann. In diesem Bereich entspricht der Amplitudengang einer guten Diskriminatorkennlinie. Bei fortschreitender Rissbildung nimmt die Federkonstante der Probe $K_P$ ab, was eine Verschiebung der Resonanzfrequenz $\omega_{oMP}$ gegen kleinere Frequenzen hin bewirkt, wie dies in Fig. 7 mit dem Pfeil r sowie gestrichelt angedeutet ist. Da die Resonanzfrequenz $\omega_{oM}$ bei der Rissbildung stationär bleibt, ergäbe sich eine immer besser werdende Diskriminiatorkennlinie, wenn nicht bei abnehmender Resonanzfrequenz $\omega_{oMP}$ auch die entsprechende Resonanzüberhöhung reduziert würde. Da jedoch die Resonanzfrequenz $\omega_{oM}$ und ebenfalls $\xi_M$ unabhängig vom Rissfortschritt konstant bleiben, sichert das Resonanzverhalten des Pulsators an sich auch bei praktisch ganz durchgerissener Probe noch eine genügend steile Kennlinie

$$\frac{\partial/\underline{Z}_{tot}(p)/}{\partial \omega_{oMP}}$$

Mit den obgenannten numerischen Werten ergibt sich eine prozentuale Aenderung der Resonanzfrequenz $\omega_{oMP}$, welche etwa um den Faktor 8 kleiner ist als die prozentuale Aenderung der mit dem Rissfortschritt abnehmenden, in der Federkonstanten wirksamen Probenquerschnittsfläche. Experimentell wurden Faktoren zwischen 4 und 12 gemessen.

Aus den Betrachtungen geht hervor, dass mit der Wahl der Resonanzfrequenzen gemäss Ungleichung (10) eine gute Diskrimination des Rissfortschrittes erreicht wird, sei dies nun durch die Auswertung des Amplitudenganges oder durch Auswertung des Phasenganges. Für die Abstimmung des gewählten Pulsators auf eine vorgegebene Probe muss für die Einhaltung der Resonanzfrequenz-Grössenverhältnisse gemäss (10) folgende Ungleichung eingehalten werden:

$$\frac{K_P}{K_M} > \frac{m_P}{m_M}$$

Die Pulsationsfrequenz $\omega$ wird vorteilhalterweise gemäss der Ungleichung

$$\omega_{oM} < \omega < \omega_{oMP} \qquad (11)$$

gewählt, wobei dann der steile Amplitudengangverlauf zwischen $\omega_{oM}$ und $\omega_{oMP}$ ausgenützt wird, oder aber gemäss

$$\omega \geqslant \omega_{oMP}.$$

Der grundsätzliche Messprozess kann wiederum nach den Blockdiagrammen von Fig. 2—4 vorgenommen werden.

In Fig. 8 ist der grundsätzliche Aufbau der Messanordnung mit einem mechanischen Pulsator dargestellt. Die pulsierende Pulsatormasse 11 mit der Masse $m_M$, der Probe P seriegeschaltet, wird mit der

Kraft $\bar{F}$ mittels eines Antriebs (nicht dargestellt) in Pulsationsbewegung versetzt. Die Probe P ist zwischen dem unteren Ende der Pulsatormasse sowie dem ortsfesten Maschinenblock 13 eingespannt. Die Kraft $\bar{F}$ wird mit einer Kraftmessvorrichtung, beispielsweise einer Kraftmessdose 15 erfasst und gibt ein Signal S($\bar{F}$) ab. Aus dem Ersatzbild von Fig. 6 ist ersichtlich, dass die Kraftmesseinrichtung, beispielsweise die Kraftmessdose 15, an einer beliebigen geeigneten Stelle, wie dies gestrichelt angedeutet ist, auch am Maschinenblock 13 angeordnet werden kann. Die Geschwindigkeit der Pulsatormasse 11 wird, wie das in Fig. 8 dargestellt ist, am von der Probe P abgekehrten Ende der Masse 9 erfasst, beispielsweise mit einem Piezoelement 17. Je nach verwendetem Messprinzip kann das Signal S($\bar{F}$) zur Konstanthaltung der zugeführten Kraft /$\bar{F}$/ als Regelrückführung auf den Antrieb (nicht dargestellt) verwendet werden oder aber es kann zur Konstanthaltung der Pulsationgeschwindigkeit /$\bar{v}$/ das Signal S($\bar{v}$) rückgeführt werden. Es sei an dieser Stelle auf die direkte Analogie des in Fig. 6 aufgezeigten Ersatzbildes zu zwei seriegeschalteten elektrischen Parallel-Resonanzkreisen hingewiesen, wobei $\bar{F}$ direkt analog zum Strom $\bar{I}$ und $\bar{v}$ direkt analog zur Spannung $\bar{U}$ ist.

Im weiteren sei darauf hingewiesen, dass mechanische Pulsatoren auf dem Markt bekannt sind, welche zum Zwecke der Wirkungsgradoptimierung immer in Resonanz betrieben werden, d.h. eine Frequenznachführregelung gemäss dem Prozess von Fig. 4 aufweisen, jedoch zu völlig anderem Zweck. Es versteht sich aber von selbst, dass diese Pulsatoren ohne gross bauliche Aenderungen unmittelbar für die Ausführung des vorgeschlagenen Messverfahrens höchst geeignet sind, indem lediglich der Frequenzverlauf von $\bar{F}$ oder $\bar{v}$ zu registrieren ist. Diese Frequenzdetektion stellt keinerlei technische Probleme und kann beispielsweise durch Auszählen der Nulldurchgänge realisiert werden. Selbstverständlich kann eine Frequenznachführung auch in Betriebspunkten neben der Resonanzfrequenz realisiert werden, wobei dann wegen der kleineren Steilheit, z.B. der Frequenz/Phasen-Kennlinie, grössere Instabilitäten auftreten können.

Sind bei Amplitudengang-Messungen keine Regelungen für die Konstanthaltung der zugeführten Kraftamplitude oder der Geschwindigkeitsamplitude vorgesehen, so können die vorgeschlagenen Messverfahren trotzdem verwendet werden, wobei dann das jeweilige Messignal /$\bar{v}$/ oder /$\bar{F}$/ der entsprechenden, momentan zugeführten Grösse /$\bar{F}$/ resp. /$\bar{v}$/ zu normieren ist.

Die vorgeschlagenen Messverfahren können ohne weiteres durch einen programmierbaren, beispielsweise rechengesteuerten Pulsator automatisch ausgeführt werden, wodurch eine äusserst hohe Maschinenausnützung in Tag- und Nacht-betrieb erreicht werden kann. Es ergibt sich die Möglichkeit, die Versuche nach der Lastwechselzahl N wie auch nach der Risslänge a(t) resp. a(N) zu steuern und beispielsweise bei einer vorgegebenen Lastwechselzahl $N_o$ oder einer vorgegebenen Risslänge $a_o$ abzubrechen oder zu unterbrechen. Ein grosser Vorteil des vorgeschlagenen Messverfahrens liegt darin, dass die rissbedingte Flächenänderung an der Probe gemessen wird, welche direkt die Federkonstante $K_P$ der Probe beeinflusst. Es wird also die Projektion aller Risse, d.h. auch von Sekundärrissen, auf die Ebene normal zur Pulsationsbewegung erfasst. Dies ist durch eine visuelle Verfolgung der Risse an der Oberfläche, wie in herkömmlichen Verfahren, nicht möglich. Ebenfalls die Oberflächen-Registrierung mit Bügeln, Datenmessstreifen etc. lässt einen Rissfortschritt nicht erkennen. Bei der Verwendung herkömmlicher mechanischer Pulsatoren ist nur ein geringer Mehraufwand nötig, um diese Pulsatoren für das vorgeschlagene Messverfahren anzupassen. Abschliessend muss betont werden, dass das beschriebene Verfahren sich nicht nur auf definitionsmässig gekerbte Proben anwenden lässt, sondern auf Proben generell mit bereits vorliegendem Riss, dessen Vorliegen, z.B. durch ein anderes Prüfverfahren, z.B. mit Oberflächenbeobachtung, festgestellt worden ist.

Im weiteren seien noch auf dem Markt erhältliche Baugruppen, wie sie erwähnt wurden, aufgezählt:

| | |
|---|---|
| —Rissaufweitungs-Messbügel von | Instron Ltd., England |
| —Pulsatoren von | " " " |
| —Wegaufnehmersysteme für die Werkstoffprüfung von | DFVLR, Institut für Werkstoffprüfung, D-Köln |
| —Piezoelektrische Kraft- resp. Beschleunigungsmesser von | Kistler Instrumente GmbH, CH-Winterthur |
| —Kraftmessdosen von | Rumul, CH-Schaffhausen |
| —Frequenzmessgerät von | Dana Laboratories, Californien/USA |
| —Beschleunigungs-Aufnehmer von | Pye Dynamics Ltd., GB-Watford |
| —Induktive Wegaufnehmer von | Mesotron AG CH-Killwangen |

**Patentansprüche**

1. Messverfahren für die Registrierung von Aenderungen an einer Materialprobe bei Wechselbeanspruchung aus Aenderungen des Frequenzganges einer mechanischen Impedanz, definiert als komplexes Verhältnis der auf die Probe als Schwingungssystem einwirkenden Kraft zur resultierenden Schnelle resp. Geschwindigkeit, dadurch gekennzeichnet, dass diese Aenderungen an einer, zur Festlegung definierter Anfangsbedingungen vorgerissenen, vorzugsweise an einer bruchmechanischen Probe als quantitatives Mass für den Rissfortschritt registriert werden.

2. Messverfahren nach Anspruch 1, dadurch gekennzeichnet, dass man eine Aenderung des Amplitudenganges ($/\bar{Z}(p)/$) registriert.

3. Messverfahren nach Anspruch 1, dadurch gekennzeichnet, dass man eine Aenderung des Phasenganges ($\sphericalangle \bar{Z}_P(p)$; $\sphericalangle \bar{Z}_{tot}(p)$) registriert.

4. Messverfahren nach Anspruch 1, dadurch gekennzeichnet, dass man die Aenderung des Frequenzganges im Frequenzbereich einer durch den Rissfortschritt beeinflussten Resonanzstelle ($\omega_{oP}$, $\omega_{oMP}$) einer mechanischen Impedanz ($\bar{Z}_P(p)$; $\bar{Z}_{tot}(p)$) registriert.

5. Messverfahren nach Anspruch 1, dadurch gekennzeichnet, dass man mindestens eine Aenderung des Frequenzganges der mechanischen Probenimpedanz ($\bar{Z}_P(p)$) registriert, indem man das Verhältnis der Probenbewegung und der auf sie wirkenden Kraft als Mass für den Rissfortschritt registriert.

6. Messverfahren nach Anspruch 1, dadurch gekennzeichnet, dass man der Probe (P) bezüglich der auf sie wirkenden Wechselbeanspruchung ($\bar{F}$) mindestens eine Last ($m_M$) serieschaltet, deren Impedans ($\bar{Z}_M(p)$) eine Resonanzfrequenz ($\omega_{oM}$) kleiner als die Resonanzfrequenz ($\omega_{oP}$) der Probenimpedanz, entsprechend deren Grundharmonischen, aufweist, und dass man Frequenzgangänderungen im Frequenzbereich einer Resonanzfrequenz ($\omega_{oMP}$) registriert, bei welcher Last ($m_M$) und Probe (p) gemeinsam in Resonanz stehen.

7. Messverfahren nach Anspruch 6, dadurch gekennzeichnet, dass man Frequenzgangänderungen im Frequenzbereich derjenigen Resonanzfrequenz ($\omega_{oMP}$) registriert, welche der Grundharmonischen entspricht, bei welcher Last und Probe gemeinsam in Resonanz stehen.

8. Messverfahren nach Anspruch 1, dadurch gekennzeichnet, dass man eine Kraftamplitude ($\bar{F}$) konstant ($\bar{F}_o$) hält, beispielsweise durch einen diesbezüglich geregelten Antrieb (M) und eine Bewegungsamplitude ($/v/$) registriert.

9. Messverfahren nach Anspruch 1, dadurch gekennzeichnet, dass man eine Bewegungsamplitude ($/\bar{v}/$) konstant ($v_o$) hält, beispielsweise durch einen diesbezüglich geregelten Antrieb (M) und eine Kraftamplitude ($/\bar{F}/$) registriert.

10. Messverfahren nach Anspruch 1, dadurch gekennzeichnet, dass man die Beanspruchungsfrequenz ($\omega$) einem vorgegebenen Amplituden- ($/\bar{F}/$; $/v/$) und/oder Phasenkriterium ($\varphi$) des Frequenzganges nachführt und die Beanspruchungsfrequenz ($\omega$) registriert.

11. Messverfahren nach den Ansprüchen 4 und 10, dadurch gekennzeichnet, dass man die Beanspruchungsfrequenz ($\omega$) der Resonanzfrequenz ($\omega_{oP}$, $\omega_{oMP}$) nachführt.

12. Messverfahren nach Anspruch 11, dadurch gekennzeichnet, dass man die Nachführung mittels einer Amplituden- ($/\bar{F}/$; $/\bar{v}/$) Extremalwertregelung vornimmt.

13. Messverfahren nach Anspruch 11, dadurch gekennzeichnet, dass man die Nachführung für eine Phasenverriegelung bei der Phase Null vornimmt.

## Revendications

1. Procédé de mesure pour l'enregistrement de variations dans une éprouvette de matériau soumise à une sollicitation alternée, à partir des variations de la caractéristique de réponse en fréquence d'une impédance mécanique, définie par le rapport complexe de la force exercée sur l'éprouvette constituant un système oscillant à la vélocité ou vitesse résultante, ledit procédé étant caractérisé en ce que ces variations sont enregistrées comme mesure quantitative de la propagation de la fissuration sur une éprouvette préfissurée pour fixer des conditions initiales définies, et de préférence sur une éprouvette de rupture.

2. Procédé de mesure selon revendication 1, caractérisé par l'enregistrement d'une variation de la caractéristique de réponse en amplitude ($/\bar{Z}(p)/$).

3. Procédé de mesure selon revendication 1, caractérisé par l'enregistrement d'une variation de la caractéristique de réponse en phase ($\sphericalangle \bar{Z}_p(p)$; $\sphericalangle \bar{Z}_{tot}(p)$).

4. Procédé de mesure selon revendication 1, caractérisé par l'enregistrement de la variation de la caractéristique de réponse en fréquence dans une plage de fréquence incluant un point de résonance influencé par la propagation de la fissuration ($\omega_{oP}$, $\omega_{oMP}$) d'une impédance mécanique ($\bar{Z}_p(p)$; $\bar{Z}_{tot}(p)$).

5. Procédé de mesure selon revendication 1, caractérisé par l'enregistrement d'au moins une variation de la caractéristique de réponse en fréquence de l'impédance mécanique ($\bar{Z}_p(p)$) de l'éprouvette, le rapport du mouvement de l'éprouvette à la force s'exerçant sur elle étant enregistré comme mesure de la propagation de la fissuration.

6. Procédé de mesure selon revendication 1, caractérisé en ce que l'éprouvette (P) est, par rapport à la sollicitation alternée ($\bar{F}$) s'exerçant sur elle, branchée en série avec au moins une charge ($m_M$), dont l'impédance ($\bar{Z}_M(p)$) présente une fréquence de résonance ($\omega_{oM}$) inférieure à la fréquence de résonance ($\omega_{oP}$) de l'impédance de l'éprouvette selon leurs fondamentales; et les variations de la caractéristique de réponse en fréquence sont enregistrées dans une plage de fréquence incluant une fréquence de résonance ($\omega_{oMP}$) pour laquelle la charge ($m_M$) et l'éprouvette (P) résonnent en commun.

7. Procédé selon revendication 6, caractérisé par l'enregistrement des variations de la caractéristique de réponse en fréquence dans la plage de la fréquence de résonance ($\omega_{oMP}$) correspondant à la fondamentale à laquelle la charge et l'éprouvette résonnent en commun.

8. Procédé de mesure selon revendication 1, caractérisé en ce qu'une amplitude de force ($\bar{F}$) est maintenue constante ($F_o$), à l'aide par exemple d'un entraînement (M) réglé dans ce but, et une amplitude de mouvement est enregistrée.

9. Procédé de mesure selon revendication 1, caractérisé en ce qu'une amplitude de mouvement ($/\bar{v}/$) est maintenue constante ($v_o$), à l'aide par exemple d'un entraînement (M) réglé dans ce but, et une amplitude de force ($/\bar{F}/$) est enregistrée.

10. Procédé de mesure selon revendication 1, caractérisé par l'asservissement de la fréquence de sollicitation ($\omega$) à un critère prédéterminé d'amplitude ($/\bar{F}/$; $/v/$) et/ou à un critère de phase ($\varphi$) de la caractéristique de réponse en fréquence et par l'enregistrement de la fréquence de sollicitation ($\omega$).

11. Procédé de mesure selon revendication 4 et 10, caractérisé par l'asservissement de la fréquence de sollicitation ($\omega$) à la fréquence de résonance ($\omega_{oP}$, $\omega_{oMP}$).

12. Procédé de mesure selon revendication 11, caractérisé par la réalisation de l'asservissement à l'aide d'une régulation qui suit un extremum de l'amplitude ($/F/$; $/v/$).

13. Procédé de mesure selon revendication 11, caractérisé par la réalisation de l'asservissement pour un verrouillage de la phase à la phase nulle.

## Claims

1. Measuring method for the recording of changes in a material specimen under alternating stress from changes in the frequency-response characteristic of a mechanical impedance, defined as the complex ratio of the force acting on the probe as a vibrating system to the resulting speed or velocity, characterised in that these changes are recorded as a quantitative measure for the crack propagation on a probe which has been pre-cracked to establish definite initial conditions, preferably on a fracture mechanics specimen.

2. Measuring method according to claim 1, characterised in that a change in the amplitude-frequency characteristic ($/\bar{Z}(p)/$) is recorded.

3. Measuring method according to claim 1, characterised in that a change in the phase-frequency characteristic ($\sphericalangle \bar{Z}_p(p)$; $\sphericalangle \bar{Z}_{tot}(p)$) is recorded.

4. Measuring method according to claim 1, characterised in that the change of the frequency response characteristic is recorded in a frequency band including a resonance frequency value ($\omega_{oP}$, $\omega_{oMP}$) of a mechanical impedance ($\bar{Z}_p(p)$; $\bar{Z}_{tot}(p)$), which resonance frequency value is affected by the crack propagation.

5. Measuring method according to claim 1, characterised in that at least one change is recorded of the frequency response characteristic of the mechanical specimen impedance ($Z_p(p)$), by recording the ratio of the specimen displacement and of the force acting on it as a measure for the crack propagation.

6. Measuring method according to claim 1, characterised in that at least one load ($m_M$) is inserted in series with the specimen (P) with reference to the alternating stress ($\bar{F}$) acting on it, the impedance ($\bar{Z}_M(p)$) of which load has a resonance frequency ($\omega_{oM}$) smaller than the resonance frequency ($\omega_{oP}$) of the impedance of the specimen, according to their fundamental harmonics, and frequency response changes are recorded in a frequency band including a resonance frequency ($\omega_{oMP}$), at which the load ($m_M$) and the specimen (P) are in resonance together.

7. Measuring method according to claim 6, characterised in that changes of frequency-response characteristic are recorded in a frequency band including that resonance frequency ($\omega_{oMP}$), which corresponds to the fundamental harmonics, at which the load and the specimen are in resonance together.

8. Measuring method according to claim 1, characterised in that a force amplitude ($\bar{F}$) is held constant ($F_o$), for example by a drive (M) controlled in this respect, and a displacement amplitude ($/\bar{v}/$) is recorded.

9. Measuring method according to claim 1, characterised in that a displacement amplitude ($/\bar{v}/$) is held constant ($v_o$, for example by a drive (M) controlled in this respect and a force amplitude ($/\bar{F}/$) is recorded.

10. Measuring method according to claim 1, characterised in that the stress frequency ($\omega$) is controlled to follow a predetermined criterion of amplitude ($/\bar{F}/$; $/v/$) and/or of phase ($\varphi$), and the stress frequency ($\omega$) is recorded.

11. Measuring method according to claims 4 and 10, characterised in that the stress frequency ($\omega$) is controlled to follow the resonance frequency ($\omega_{oP}$, $\omega_{oMP}$).

12. Measuring method according to claim 11, characterised in that the control is carried out by means of a control to follow an amplitude extreme value ($/\bar{F}/$; $/\bar{v}/$).

13. Measuring method according to claim 11, characterised in that the control is carried out for a phase locking at zero phase.

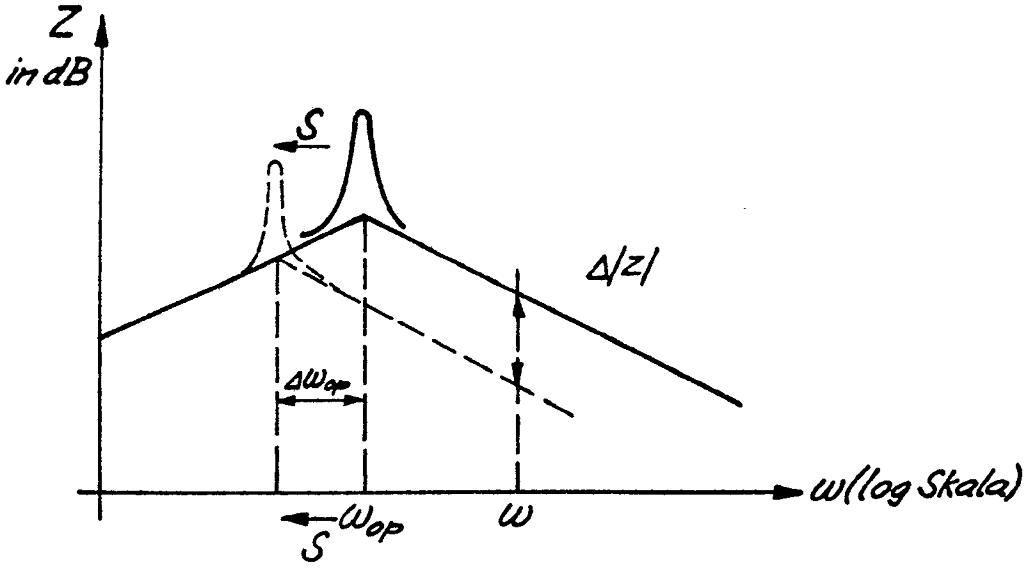


FIG.1a

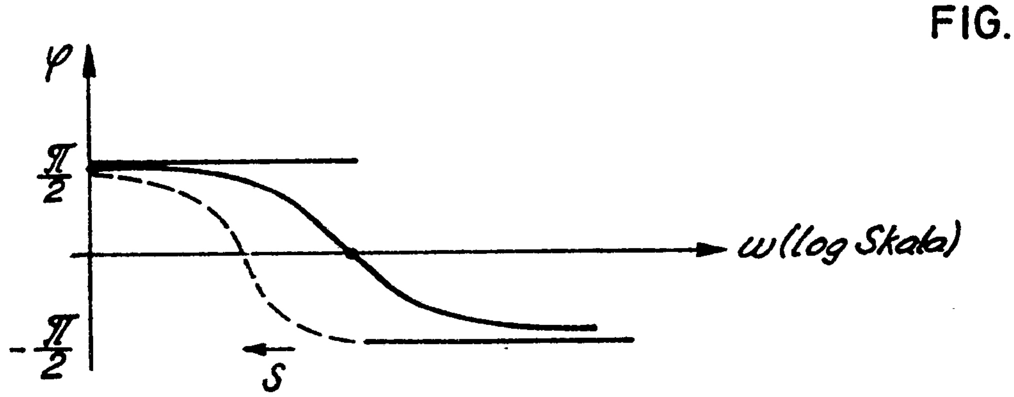


FIG.1b

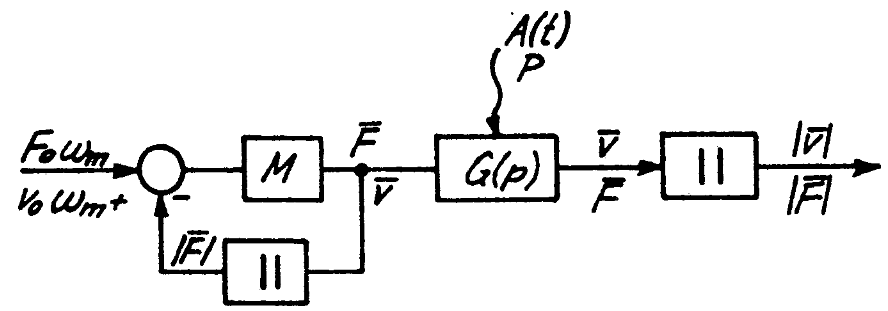


FIG.2

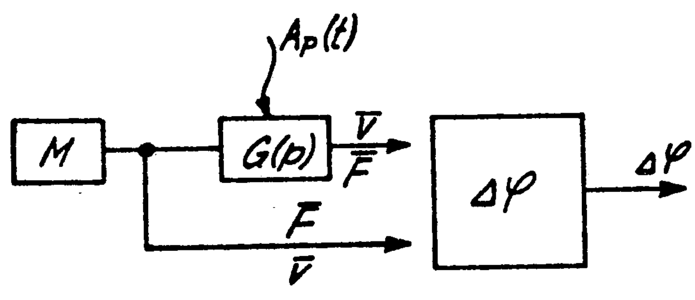


FIG.3

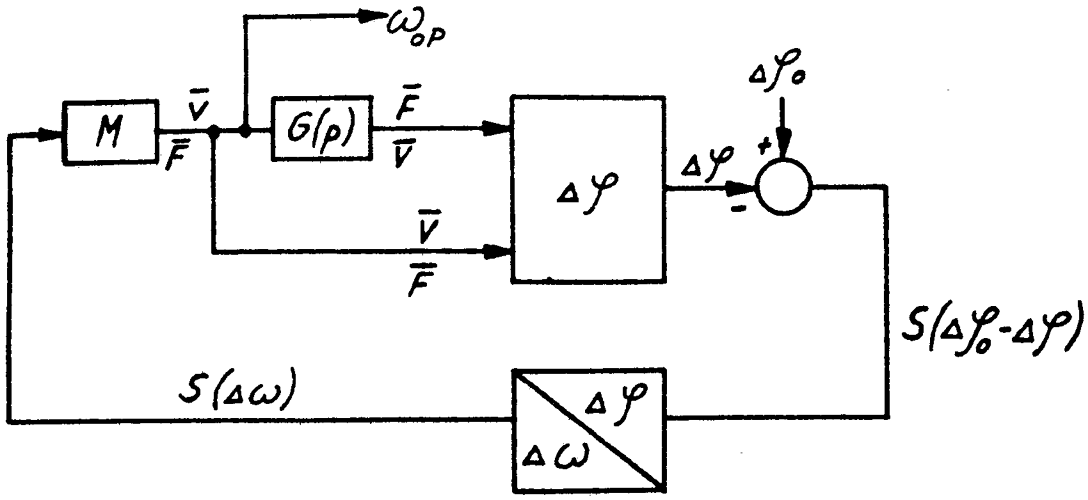


FIG. 4

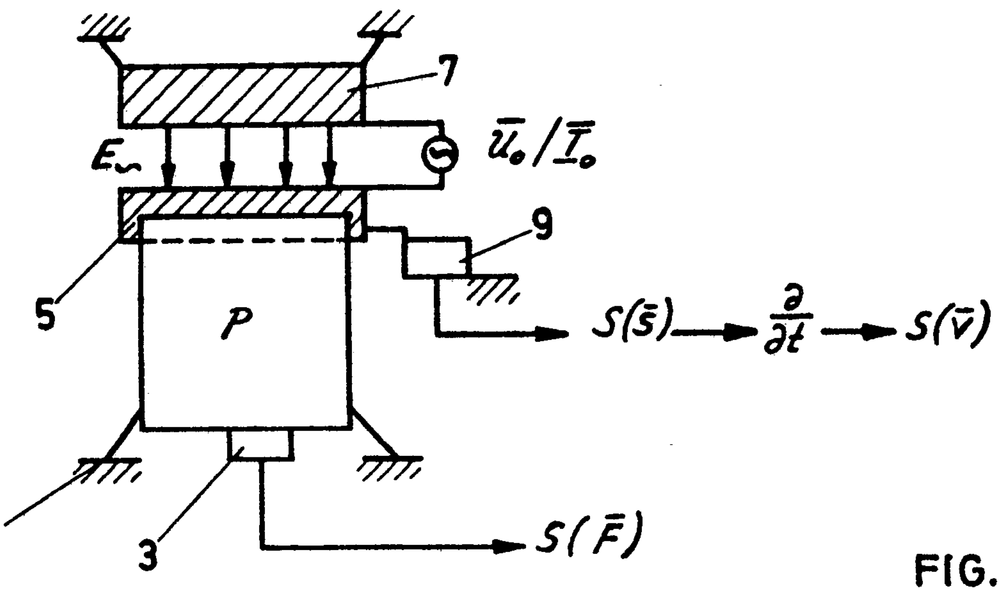


FIG. 5

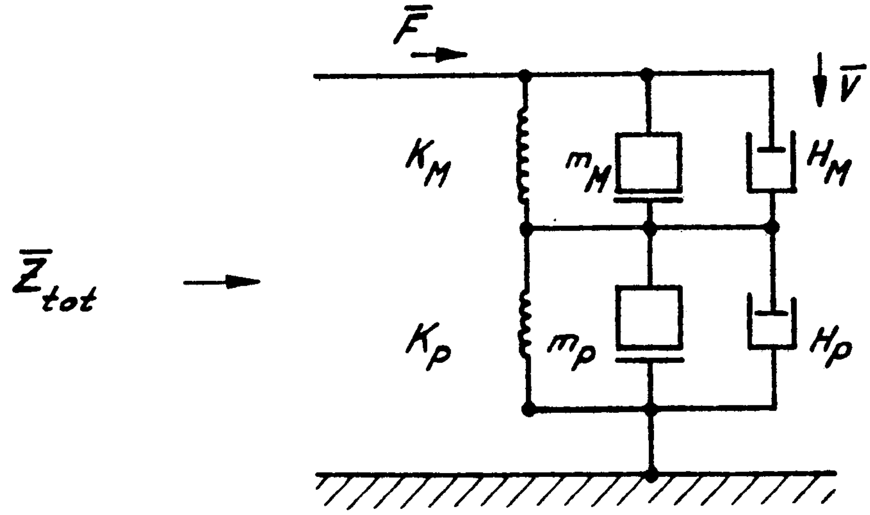


FIG. 6

FIG. 7

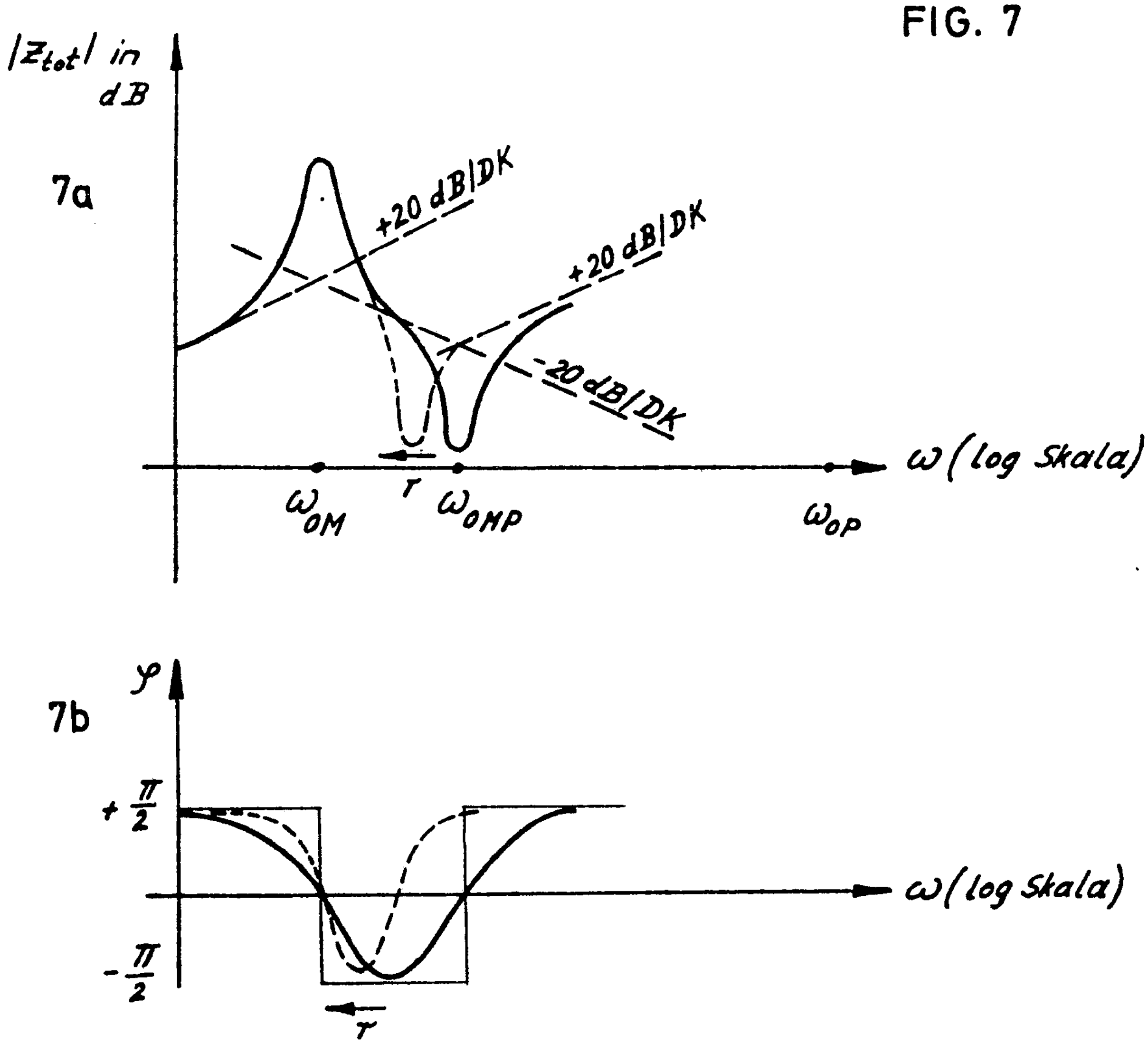
|Ztot| in dB
7a
+20 dB/DK
+20 dB/DK
-20 dB/DK
ω (log Skala)
τ
ω0M
ω0MP
ω0P
φ
7b
+ π/2
- π/2
ω (log Skala)
τ

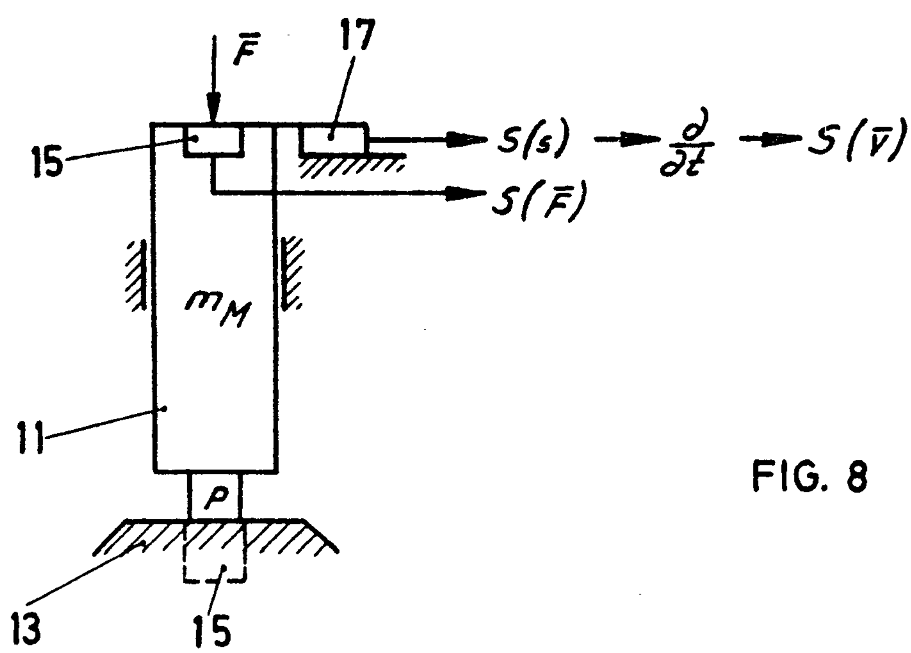
F̄
17
15
S(s)
∂/∂t
S(v̄)
S(F̄)
m_M
11
P
13
15

FIG. 8